# EUROPÄISCHE PATENTANMELDUNG

(11) **EP 1 101 424 A2**
(43) Veröffentlichungstag der Anmeldung: **23.05.2001**
(21) Anmeldenummer: 00122805.5
(22) Anmeldetag: 19.10.2000
(51) Int. Cl.: A47B 21/00

(54) **Arbeitsplatz-Steckdose**

(30) Priorität: 19.10.1999 DE 29918768 U; 06.11.1999 DE 19953268
(71) Anmelder: Pöllet, Wilfried, D-90596 Schwanstetten (DE)
(72) Erfinder: Pöllet, Wilfried, D-90596 Schwanstetten (DE)

(57) **Zusammenfassung**

Wenn eine konfektionierte Daten-Leitung mit ihrer schon angeschlagenen Vielfach-Steckstelle so in des geteilte Gehäuse einer Arbeitsplatz-Steckdose eingesetzt wird, daß diese direkt angeschlagene Installation selbst im Gehäuse-Oberteil von außen als Daten-Steckbuchse für einen Geräteanschluß zugänglich ist, dann sind dadurch unerwünschte zusätzliche Trennstellen auf dem Wege zum Gerät vermieden, und ein Wechsel in der EinspeiseZuordnung kann einfach durch Austausch der Gehäuse-Oberteile bzw. der hier eingeführten und mittels ihrer Steckinstallationen darin festgelegten konfektionierten Leitungen erfolgen.

## Beschreibung

Die Erfindung betrifft eine Arbeitsplatz-Steckdose etwa der Art, wie sie aus der DE 38 12 538 A1 mit einer Telekommunikations-Schwachstromsteckdose neben Starkstromsteckdosen im durchgehenden Gehäuse einer sogenannten Steckdosenleiste bekannt ist. Gemäß jener Veröffentlichung ist vorgesehen, im Innern der Steckdosenleiste eine Adapterleiterplatte auswechselbar zu haltern, die mit zwei zusammengeschalteten Steckkupplungen auch unterschiedlicher Bauarten bestückt ist, einer für den Anschluß eines durch eine Ausnehmung stirnseitig ins Gehäuse eintretenden Telekommunikationskabels und die andere für den Anschluß der Telekommunikationssteckdose in der Steckdosenleiste. Im Zuge von Datenleitungen wäre das Zwischenschalten eines solchen Adapters als Übergabestelle aber nicht akzeptabel, weil das sogar gleich zwei Leitungsunterbrechungen in der Steckdosenverkabelung bedingt, in der eigentlich aus Sicherheitsgründen möglichst keine Unterbrechung des Datenkabelanschlusses vorkommen sollte.

Aus der DE 40 00 934 A1 ist eine geschaltete Steckdosenreihe mit modulartig ausgebildeten, flexibel aneinander geklammerten Steckdosen bekannt, die durch austauschbare Einsatzscheiben den Steckern unterschiedlicher Normen hinsichtlich Querschnittsprofilen und Steckstiftanordnungen zugeordnet werden können. Die GB 2 331 406 A1 offenbart quaderartige Steckdosen-Module, die auf einer Schmalseite mit versenkten Steckstiften in einer Steckerkupplung und damit fluchtend gegenüberliegend mit Steckbuchsen in einem vorstehenden komplementären Steckersockel ausgestattet sind. In eine Kupplung kann wahlweise der Buchsen-Stecker eines Speisekabels oder der Buchsen-Sockel eines anderen Moduls eingeführt sein. Zum Anschluß von Kabeln mit Steckern unterschiedlicher Normen ist auf einer Breitseite vor gerätefesten Kontaktbereichen eine austauschbare Einsatzscheibe mit Stecklöchern und Erdungsstift angeordnet. In beiden Publikationen werden Probleme einer Kombination aus Starkstrom- und Schwachstromdosen oder gar des Datenkabelanschlusses nicht behandelt.

Im Rahmen vorliegender Erfindung ist hinsichtlich der leistenartigen Gruppierung der Steckstellen insbesondere an eine Arbeitsplatz-Steckdose gedacht, wie sie etwa in der eigenen DE G 2 95 08 053.1 U1 und vorzugsweise in der nicht vorveröffentlichten eigenen DE G 2 99 18 758.6 beschrieben ist, worauf hier zur Vermeidung von Wiederholungen in Ergänzung nachfolgender Beschreibung voll-inhaltlich Bezug genommen wird.

Solche Steckdosen dienen dem Anschluß von am Arbeitsplatz betriebenen Geräten an das Versorgungsnetz. Dafür sind Steckdosen-Einsätze, beispielsweise in der Bauform von Schutzkontakt-Nutprofiltöpfen, an Verbindungskabel angeschlossen, die gewöhnlich zu Übergabepunkten in einer benachbarten Unterflur-Installation führen, von wo dann Versorgungsleitungen zu Raum-Einspeisungspunkten verlaufen.

Problematisch ist allerdings der Anschluß, wenn es sich nicht um Netz- oder einfache Telekommunikations- sondern um Datenleitungs-Steckdosen handelt. Denn einerseits sind die mit sehr vielen Adern bestückt, deren korrekte Verbindung zu den Buchsenanschlüssen entsprechend aufwendig und fehlerträchtig ist; und vor allem sollen aus Gründen des Datenschutzes und der Übertragungssicherheit möglichst wenig Trennstellen (wie Steckverbinder) im Zuge von Datenleitungen von der Raumeinspeisung zum Endgerät (Rechner oder Monitor) vorkommen.

Der Erfindung liegt deshalb die Aufgabe zugrunde, eine insbesondere für die Datenübergabe vorteilhafte Arbeitsplatz-Steckdose anzugeben, die darüberhinaus aber auch variable Einsatzmöglichkeiten in der allgemeinen Büroelektrifizierung eröffnet, und Maßnahmen anzugeben, die Kupplungsstellen im Verlauf insbesondere von Datenleitungen zu Schreibtischanschlüssen möglichst erübrigen.

Diese Aufgabe ist erfindungsgemäß nach den Merkmalen des Hauptanspruches gelöst. Danach wird auf die im Handel schon mit angeschlagenen Steckinstallationen konfektioniert verfügbaren Datenleitungen zurückgegriffen, deren Steckinstallationen nun aber nicht mehr als Übergabestellen benutzt werden, sondern selbst schon als die Steckdosen -Steckstellen Einsatz finden; nämlich indem sie bei angeschlossenen verbleibenden Leitungen form- und / oder kraftschlüssig in das Steckdosengehäuse so eingesetzt werden, daß sie danach von außerhalb des Steckdosen-Gehäuses schon unmittelbar ― also direkt, ohne interne Verdrahtungserfordernisse ― als die Steckdosen-Buchsen für die Stifte eines Steckers am Kabel für den Endgeräteanschluß zugänglich sind.

Vorzugsweise ist die Steckdose als ein Modul einer modular aufgebauten und am Rande eines Arbeitsplatzes befestigbaren Gruppe von geteilten Gehäusen ausgestaltet, deren Gehäuse-Oberteile zur Aufnahme unterschiedlicher Steckstellen für Stark- und Schwachstromanschlüsse austauschbar sind.

Aus Gründen der Übertragungssicherheit in einer Datenleitung sollte frühestens 900 Zentimeter nach der Einspeisung eine Unterbrechung in Form einer nächstfolgenden Steckstelle auftreten - während mit je einer Steckstelle in der Anschlußeinheit und am Schreibtischverteiler auf diesem kurzen Weg schon eine Steckstelle über der Norm gelegen ist. Deshalb verlaufen gemäß einer vorteilhaften Weiterbildung vorliegender Erfindung jedenfalls die Datenleitungen der Schreibtischverkabelung unterbrechungsfrei durch einen Unterflur-Staukasten zum schlingenförmigen Einlegen von - im Interesse der Ausstattungsflexibilität zwar vorgehaltenen aber - momentan nicht benötigten Leitungslängen. Das ist leichter und ordentlicher zu bewerkstelligen, als der oft vergebliche Versuch eines Verstauens durch Zurücksehieben in einen Kabelkanal oder Zwischenboden hinein, wo andere Kabel und Einbauten das Hineinschieben stören und zu nur desto mehr bremsenden Stauchungen führen. So verlaufen die Datenleitungen durch den Kasten unter Schlaufenbildung zum Verstauen momentan überschüssiger Leitungslänge, die eventuell nur während des Installationsvorganges für die Handhabung und dann erst wieder benötigt wird, wenn der Schreibtisch einmal weiter von der Installationseinrichtung fort gerückt werden sollte. Diese durchlaufenden Datenleitungen sind also an ihren an die Steckdoseninstallationen anzuschließenden Enden schon mit Buchsensteckern konfektioniert, die in Oberteile von Datenleitungs-Steckdosengehäusen am Schreibtisch einrastbar und dort dann unmittelbar für die Stiftstecker der Anschlußleitungen an Datenendgeräte zugänglich sind. Deshalb treten nun von der raumseitigen Einspeisung in die Datenleitung bis hin zu dieser einzigen Steckstelle am Orte des Geräteanschlusses keine durch weitere Steckstellen zu überbrückenden Unterbrechungen mehr auf.

Die Zuführung zum jeweiligen Unterflur-Staukasten kann durch einen in herkömmlicher Weise in den Boden eingesenkten Kabelkanal relativ geringen lichten Querschnitts erfolgen, da der nun keine variablen Staulängen mehr aufnehmen muß. Die werden vielmehr nach Fertigstellung des Schreibtischanschlusses dem aktuellen Anfall gemäß ― nicht mehr über längere beengte Kanalstrecken, sondern nur noch - in den benachbarten großvolumigen Staukasten zurückgelegt. Deshalb ist es besonders zweckmäßig, den ggf. mit einer Netzanschlußeinheit ausgestatteten Staukasten unter die große, Abdecker Öffnung in einer Bodenfliese des Oberbodens eines Installations-Doppelbodens zu montieren. Denn dann besteht zwischen den beiden voneinander beabstandeten Bodenebenen ― und vorzugsweise auch noch unter dem Staukasten hindurch ― genügend Platz für den etwa sternförmigen freien Verlauf von Kabeln und Leitungen zu zentralen Einspeisestellen des Raumes sowie für die Verlegung von anderen haustechnischen Versorgungs- wie Heizungs- und Lüftungssträngen. Andererseits kann im Interesse einer flexiblen und auch noch nachträglich freizügig veränderbaren Schreibtischverkabelung eine solche zur Installation bestückte Fliese ohne weiteres aus dem Raster ihrer Tragrahmen herausgenommen und im Austausch mit einer unbestückten Fliese um einige Meter versetzt werden, um einer veränderten Schreibtischauftstellung folgen, also auch insoweit die freien Leitungslängen durch den Raum in der Nachbarschaft des Schreibtisches möglichst kurz halten zu können.

Aus ästhetischen und Sicherheitsgesichtspunkten nachteilig ist noch die unruhige Parallelführung der verschiedenen Kabel und Leitungen unterschiedlicher Stärken und Steifigkeiten vom Unterflur-Staukasten zur Einspeisestelle an den Schreibtischverteiler. Das wird dadurch behoben, daß alle vom Staukasten zum Schreibtisch hochzuführenden Kabel und Leitungen in einem flexiblen geschlossenen oder netzförmigen Kunststoff-Schlauch zusammengefaßt werden. Wenn dieser Schlauch, etwa infolge Wellprofiles seiner Wandung bei entsprechendem Material, hinreichend steif-elastisch ist, kann er längs einer Mantelflächen-Erzeugenden, also der Länge nach aufgeschnitten sein, um die Leitungen nicht von einem Stirnende aus axial einfädeln zu müssen sondern seitlich radial einschieben zu können und deshalb selbst größerbauende Steckerkupplungen von den schon konfektionierten Kabeln und Leitungen nicht erst wieder abnehmen und dann erneut anschließen zu müssen. Dieser gemeinsame Einfassungs-Schlauch für alle die unterschiedlichen Kabel und Leitungen einer neuzeitlichen Schreibtischversorgung erstreckt sich aber nicht nur vom Schreibtisch bis zum Boden, sondern auch noch in den Staukasten hinein, um hier mit noch verfügbarer Länge eingewunden zu werden, und bis durch den Kastenboden hindurch, um dann neben oder unter dem Staukasten ― ebenso wie mit dem anderen Schlauch-Stirnende bei der Schreibtisch-Einspeisung ― lösbar festgelegt zu werden. Nicht im Staukasten selbst, sondern erst bei jener unterflurseitigen Festlegung des bodenseitigen Endes des Bündelungs-Schlauches treten also die Kabel und Leitungen aus diesem Einfassungsschlauch wieder heraus, um dann im Zwischenraum des Doppelbodens ― bedarfsweise auch ggf. kreuz und quer über den bauseitigen unteren oder Trag-Boden geführt - zu ihren jeweiligen raumseitigen Einspeisestellen hin zu verlaufen.

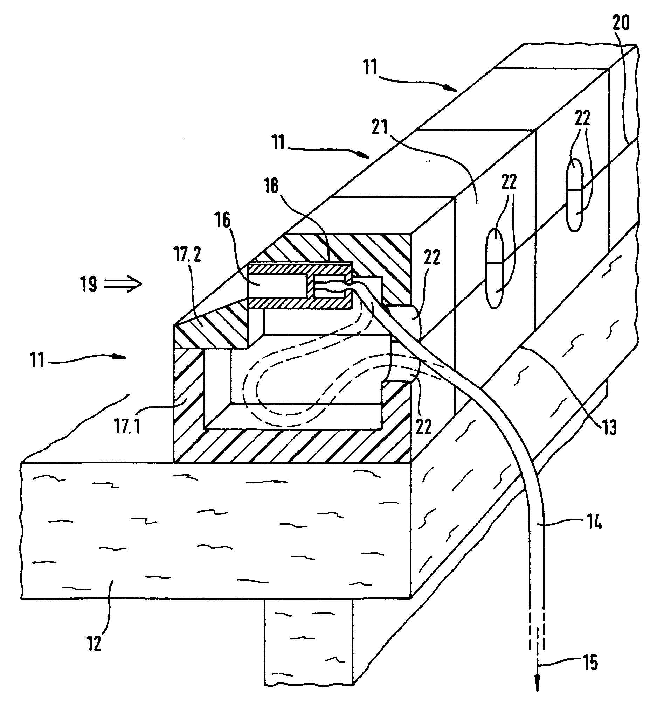

Bezüglich sonstiger Einzelheiten und Weiterbildungen der Erfindung wird auf die nachstehende Beschreibung der Zeichnung verwiesen, in deren einziger Figur nicht ganz maßstabsgerecht und auf das Prinzipielle vereinfacht ein bevorzugtes Realisierungsbeispiel zur erfindungsgemäßen Arbeitsplatz-Datenstecksdose im Schnitt skizziert ist.

Die skizzierte Tisch- oder Arbeitsplatz-Steckdose 11 ist beispielsweise an der Arbeitsplatte 12 eines Arbeitstisches, vorzugsweise wie in der eingangs zitierten älteren Anmeldung G 2 99 18 758.6 näher erläutert am hinteren Rand 13 der Platte 12, mittels versenkt eingreifender Schraubklemmen lösbar befestigt. Entsprechend der dortigen Darstellung sind gewöhnlich mehrere solcher modular gestalteter Tischsteckdosen 11 modulartig aneinandergereiht. Die einzelnen Module (also Steckdosen 11) können unterschiedliche Versorgungsaufgaben wahrnehmen, etwa an unterschiedliche Netzleitungen stabilisierter und allgemeiner Versorgungsnetze, an einfache Kommunikationsleitungen und an komplexe Datenleitungen 14 angeschlossen sein. Die Leitungen 14 kommen von einer Unterboden-Installation 15 in der Nähe des Arbeitsplatzes und sind dort mit ihren überschüssigen Längen in einen Staukasten schlangenförmig eingelegt, wie in der eigenen nicht vorveröffentlichten G 2 99 18 768.3 näher beschrieben. Netz- und Kommunikationsleitungen sind bei der Unterflur-Installation 15 an Übergabestellen in Form von mechanisch kodierten Steckverbindern geführt, an denen sternförmig von Raum-Einspeisepunkten her kommende Versorgungsleitungen enden.

Eine Datenleitung 14 soll allerdings u.a. aus Gründen der Betriebssicherheit möglichst ohne Trennstellen von der Raumeinspeisung bis zum Geräteanschluß geführt werden und wird deshalb ununterbrochen durch die Unterflur-Installation 15 ― ggf. ebenfalls unter Einschlingen momentan nicht benötigter Leitungslänge in deren Stau-Kasten ― hindurch bis zur Daten-Tischsteckdse 11 an der Arbeitsplatte 12 hinauf gezogen.

Solche sehr viele Adern führenden Datenleitungen 14 sind in großen Längen mit Vielfach-Steckstellen 16 samt Kabel-Zugentlastung konfektioniert kommerziell verfügbar. Um sie an eine der mit entsprechenden Steck-Buchsen 16 ausgestatteten Steckdosen 11 anzuschließen, muß dann allerdings die schon an die Mehrfachleitung 14 angeschlagene Steckstelle 16 wieder abgenommen und jede der dadurch freigelegten Adern an den zugeordneten der Steckanschlüsse in der Dose angeklemmt oder angelötete werden. Das ist ersichtlich sehr arbeitsaufwendig und fehlerträchtig, was gerade den Zuverlässigkeitsanforderungen an Datenleitungen 14 besonders abträglich ist.

Deshalb ist bei den erfindungsgemäßen Daten-Tischsteckdosen 11 vorgesehen, deren im Kunststoff-Spritzguß erstellten Gehäuse 17 jeweils in ein Unterteil 17.1 und ein leicht davon abnehmbares, etwa damit verschraubtes oder einfach verrastetes Oberteil 17.2 zu trennen. Das geräteseitig etwas pultartig abgeschrägte, schalenförmige Gehäuse-Oberteil 17.2 ist innen mit einer kraft- und/oder formschlüssig gestalteten, vorzugsweise gleich im Kunststoff-Spritzguß mit eingeformten Aufnahme 18 für eine Daten-Steckstelle 16 etwa nach Art einer großen sog. Texas-Buchse ausgestattet. Die Steckstelle 16 bleibt nun samt ihrer Zugentlastung an das entsprechend konfektioniert angelieferte Kabel 14 angeschlagen, wenn sie - etwa quer zur Steckrichtung 19 des Geräteanschlusses - manuell von der Gehäuse-Teilungsfuge 20 her in die Aufnahme 18 des abgenommenen Gehäuse-Oberteiles 17.2 rastend eingesetzt wird, aus der sie bedarfsweise entgegengesetzt auch wieder herausnehmbar ist.

Die vieladrige und deshalb nicht sehr flexible Leitung 14 verläuft beim Aufsetzen des so bestückten Oberteiles 17.2 auf das Gehäuse-Unterteil 17.1 von der Rückseite der Buchse 16 durch einen in der Rückwand 21 des Gehäuses 17 wie skizziert beiderseits (oder nur auf einer Seite) der Teilungsfuge 20 quer zu dieser bedarfsweise aufzubrechenden oder schon freigesparten kurzen Schlitz 22 von der Breite etwa der Dicke der Leitung 16 (also nicht ihrer viel großvolumigeren, fest angeschlagenen Steckbuchse 16) aus dem Gehäuse 17 heraus zur Unterflur-Installation 15. Die Leitung 14 kann aber auch zunächst wie strichpunktiert skizziert zur weiteren Entlastung des Einsatzes der Vielfach-Buchse 16 gegen wechselnde Zug- und Biegebeanspruchungen vor ihrem Durchtritt durch den Schlitz 22 in das Gehäuse-Unterteil 17.1 der Steckdose 11 eingeschlungen werden.

Wenn etwa im Zuge von Umrüstungen eine Datenleitung 14 an eine andere Steckdose 11 dieser Modulgruppe oder einer anderen Modulgruppe gelegt werden muß, dann müßten normalerweise die einzelnen Adern zunächst von den Steckanschlüssen der Buchse 16 gelöst und anderweitig wieder befestigt werden. Das wäre sehr arbeitsaufwendig, wenn es sich um Lötanschlüsse handelt. Bei Klemmanschlüssen dagegen besteht in der Praxis darüberhinaus die große Gefahr von Kerbspannungs-Sprödbrüchen der schon einmal eingeklemmt gewesenen Adern, wenn die nun für den neuerlichen Anschluß zurechtgebogen werden. Nach der erfindungsgemäßen Lösung dagegen ist es nur erforderlich, die Gehäuse-Oberteile 17.2 mit ihren weiterhin angeschlossen verbleibenden Leitungen 14 entsprechend zu vertauschen ― allenfalls die Steckstellen 16 mit ihren weiterhin angeschlossen verbleibenden Leitungen 14 zwischen unterschiedlich positionierten Oberteilen 17.2 auszutauschen. Das gilt entsprechend, wenn ein Datengeräteanschluß verlegt werden muß, um etwa einer zusätzlichen Stromzuführung Platz zu machen : Dann braucht lediglich das mit der Datenbuchse 16 ausgestattete Gehäuseoberteil 17.2 samt angeschlossen verbleibender Leitung 14 abgenommen und auf ein anderes Unterteil 17.1 versetzt zu werden, um an der dadurch freigemachten Position auf das dort verbliebene Unterteil 17.1 etwa ein Oberteil 17.1 mit Netzsteckdose aufzustecken.

Wenn also eine konfektionierte Daten-Leitung 14 mit ihrer schon angeschlagenen Vielfach-Steckstelle 16 so in des geteilte Gehäuse 17 einer Arbeitsplatz-Steckdose 11 eingesetzt wird, daß diese direkt angeschlagene Steckbuchsen-Installation 16 selbst am Gehäuse-Oberteil 17.2 von außen als Daten-Steckbuchse für einen Geräteanschluß zugänglich ist, dann sind dadurch unerwünschte zusätzliche Trennstellen in der Datenleitung 14 auf ihrem Weg zum Datenendgerät vermieden, und ein Wechsel in der Einspeise-Zuordnung kann einfach durch Austausch von so bestückten Gehäuse-Oberteilen 17.2 bzw. der hier eingeführten und mittels ihrer Steckinstallationen 16 darin wieder-lösbar festgelegten konfektionierten, vieladrigen Datenleitungen 14 erfolgen, ohne dafür deren Adern freilegen und umklemmen zu müssen.

## Patentansprüche

1. Arbeitsplatz-Steckdose (11) mit einer Schwachstrom-Steckdose im Steckdosen-Gehäuse (17), an deren Steckbuchsen die Adern einer Mehrfachleitung angeschlossen sind, dadurch gekennzeichnet, daß an die Adern einer konfektionierten Datenleitung (14) direkt angeschlagene Steckstellen (16) selbst - ohne weitere Übergabestellen im Verlauf des Anschlusses der Steckdosenverkabelung - in eine Aufnahme (18) innerhalb des Gehäuses (17) eingesetzt sind, wo sie als die Steckdosen-Steckbuchsen dienend unmittelbar als Endgeräteanschluß von außen zugänglich sind.

2. Steckdose nach Anspruch 1, dadurch gekennzeichnet, daß die Leitung (14) von der Steckstelle (16) aus durch einen Schlitz (22) an einer Gehäuse-Teilungsfuge (20) aus dem Gehäuse (17) heraus verläuft.

3. Steckdose nach Anspruch 1 oder 2, dadurch gekennzeichnet, daß die Leitung (14) außerhalb des Gehäuses (17) zu einer Unterflur-Installation (15) verläuft.

4. Steckdose nach Anspruch 3, dadurch gekennzeichnet, daß die Leitung (14) mit überschüssiger Länge in die Unterflur-Installation (15) eingeschlungen ist.

5. Steckdose nach Anspruch 3 oder 4, dadurch gekennzeichnet, daß die Leitung (14) ohne Trennstelle durch die Unterflur-Installation (15) hindurch verläuft.

6. Steckdose nach einem der vorangehenden Ansprüche, dadurch gekennzeichnet, daß in ihr die Steckstelle (16) einer Daten-Leitung (14) selbst von außen zugänglich austauschbar befestigt ist.

7. Steckdose nach einem der vorangehenden Ansprüche, dadurch gekennzeichnet, daß sie ein Modul einer modular aufgebauten und am Rande (13) eines Arbeitsplatzes befestigbaren Gruppe von geteilten Gehäusen (17) ist, deren Gehäuse-Oberteile (17.2) zur Aufnahme unterschiedlicher Steckstellen für Stark- und Schwachstromanschlüsse austauschbar sind.

8. Steckdose nach einem der vorangehenden Ansprüche, dadurch gekennzeichnet, daß die Leitungen (14) unterbrechungsfrei durch einen raumseitig zugänglichen und abdeckbaren Unterflur-Kasten zum Verstauen von für den Steckdosen-Anschluß nicht benötigter Länge der jeweiligen Leitung (14) zu einer Einspeisestelle verläuft.

9. Steckdose nach Anspruch 8, dadurch gekennzeichnet, daß die Leitungen (14) in einem Schlauch (33) geführt sind, der sich von ihr zum Kasten erstreckt und herausziehbar in diesen eingeschlungen ist.
